# EUROPÄISCHE PATENTSCHRIFT

(11) **EP 0 854 120 B1**
(45) Veröffentlichungstag und Bekanntmachung des Hinweises auf die Patenterteilung: **16.09.2009**
(21) Anmeldenummer: 98100531.7
(22) Anmeldetag: 14.01.1998
(51) Int. Cl.: C03C 8/14

(54) **Teilweise kristallisierende bleifreie Emailmasse für Kraftfahrzeugglas**
Partially crystallizing lead-free enamel composition for vehicle glazing
Composition d'émail sans plomb cristallisant partiellement pour vitrage automobile

(30) Priorität: 16.01.1997 US 784924
(43) Veröffentlichungstag der Anmeldung: 22.07.1998
(73) Patentinhaber: Ferro GmbH, 60327 Frankfurt (DE)
(72) Erfinder: Sakoske, George E., 44124 Mayfield Heights, Ohio (US)
(74) Vertreter: Reinhardt, Markus

(56) Entgegenhaltungen:
- EP-A- 0 782 974
- US-A- 4 882 301
- US-A- 5 153 150
- US-A- 5 208 191
- US-A- 5 286 270

## Beschreibung

### Erfindungsbereich

Die vorliegende Erfindung betrifft Keramikemailmassen zur Verwendung an Windschutzscheiben, Seitenleuchten und Heckscheiben für Kraftfahrzeuge.

### Hintergrund der Erfindung

Keramikemailmassen eignen sich für eine Vielfalt von Anwendungen, wie dekorative Überzüge für Glasartikel, Porzellanartikel und dergleichen. Sie sind besonders nützlich zum Herstellen von farbigen Rändern ringsum, Glasscheiben für Windschutzscheiben, Seitenleuchten und Heckscheiben für Kraftfahrzeuge. Die farbigen Ränder verbessern das Aussehen und verhüten Abbau darunterliegender Klebstoffe durch UV-Strahlung.

Im allgemeinen bestehen diese Emailmassen hauptsächlich aus einer Glasfritte, einem Färbemittel und einem organischen Medium. Sie werden auf einen Zielbereich des Substrats aufgetragen und danach eingebrannt, um das organische Medium abzubrennen und die keramischen Feststoffe an die Oberfläche des Substrats anzuschmelzen.

Für Kraftfahrzeuganwendungen bestimmte Glasplatten werden in dem Zielbereich im allgemeinen mit der Keramikemailmasse beschichtet und dann bei erhöhten Temperaturen einem Druckformprozeß unterzogen. Während dieser Behandlung wird das Email flüssig und schmilzt an das Glassubstrat an, und das Glas wird zu einer gewünschten Endform geformt. Viele der bisher verfügbaren Überzüge neigen jedoch dazu, an den das Formwerkzeug bedeckenden Materialien, beispielsweise eines mit Glasfasern oder Metallfasern beschichteten Formwerkzeugs, anzuhaften, da nach dem Schmelzen die Viskosität dieser herkömmlichen Emails gering ist und sie dazu neigen, bei hoher Temperatur an anderen Materialien anzuhaften. Solche bisher verfügbaren Emails eignen sich daher nicht für Glasformprozesse, bei denen das mit Email überzogene erhitzte Glas mit Hilfe eines Formwerkzeugs unter Druck geformt wird.

Mit dem Ziel, das Formen von mit einem Keramikemail überzogenen Glasplatten zu erleichtern, ohne daß das Email an dem Formwerkzeug anhaftet, wurden mehrere Methoden vorgeschlagen. So schlagen z.B. die (an Boaz erteilten) US-Patente Nr. 4 596 590 und 4 770 685 den Zusatz eines Metalloxidpulvers geringer Wertigkeit wie Cu(I)-oxid zu der Farbmasse vor, um zwischen dem Überzug und dem mit Faserglas beschichteten Formwerkzeug eine nichthaftende Sperrschicht zu bilden. Die (an Boaz erteilten) US-Patente Nr. 4 684 389; 4 857 096; 5 037 783 und EP 490 611 schlagen mit ähnlicher Absicht den Zusatz eines fein verteilten Zinkmetallpulvers vor. In dem (an Stotka erteilten) US-Patent Nr. 4 983 196 wird die Verwendung eines Eisenmetallpulvers vorgeschlagen.

Die (an Ruderer et al erteilten) US-Patente Nr. 5 153 150; 5 208 191 und 5 286 270 schlagen eine angeblich verbesserte haftresistente Keramikemailmasse vor, bei der ein Zn₂SiO₄ enthaltendes Impfpulver mit dem Glasfrittenbestandteil der Masse kombiniert wird. Der Glasfrittenbestandteil umfaßt mindestens 35 Gew.% Vorläufer von kristallinem Zn₂SiO₄, insbesondere mindestens 30 Gew.% ZnO und mindestens 5 Gew.% SiO₂.

Ein weiterer Nachteil verschiedener bisher verfügbarer Keramikemailsysteme besteht darin, daß sie eine bleihaltige Glasfritte umfassen. Aus umweltlichen Überlegungen ist es wünschenswert, von dem Gebrauch jeglichen bleihaltigen Systems abzusehen.

In dem an Gettys et al erteilten US-Patent Nr. 4 882 301 wird die Verwendung eines kristallisierenden Anteils Cd₂SiO₄ in Verbindung mit einem Bleiborsilicatglas vorgeschlagen. Laut dieser Bezugsurkunde kann in dem Glasansatz Zn unmittelbar für Cd substituiert werden. Laut dem US-Patent Nr. 5 208 191 sind jedoch die Ergebnisse bei Substitution von Cadmium durch Zink keineswegs wunschgemäß gewesen.

Obgleich sich mehrere der vorstehend genannten Emailsysteme in herkömmlichen Glasformverfahren möglicherweise zufriedenstellend bewähren, können sie zur Verwendung in den neuerdings entwickelten "Tiefbiegeprozessen" zum Formen von Kraftfahrzeugglas ungeeignet sein. Auch müssen die Emailmassen gewissen chemischen Mitteln gegenüber, mit denen sie unter Umständen in Kontakt kommen, beständig sein.

Die bisher verfügbaren Emailmassen leiden unter einem oder mehreren der vorstehend genannten Mängel. Dagegen schafft die vorliegende Erfindung eine Keramikemailmasse, die von diesen Nachteilen frei ist.

### Zusammenfassung der Erfindung

Die vorliegende Erfindung betrifft eine bleifreie Keramikemailmasse, die beim Schmelzen bei hoher Temperatur auf einem Glassubstrat ein mindestens teilweise kristallisierendes Zinksilicatmaterial bildet.

Eine erfindungsgemäße Keramikemailmasse gemäß Anspruch 1 umfaßt 40-80 Gew.% von mindestens einer bleifreien Metalloxidglasfritte, enthaltend als Vorläufer von Zn₂SiO₄, in der gleichen oder in verschiedenen der genannter bleifreien Glasfritten ZnO und SiO₂, , 0,05-15 Gew.% Zinksilicat-Impfmaterial und 20-35 Gew.% eines Pigments. Die Summe der gewichtsmäßigen Anteile der durch eine oder mehrere Fritten gelieferten vorstehend genannten Vorläufer von Zn₂SiO₄ ist geringer als etwa 35 Gew.% und höher als etwa 15 Gew.% der Fritte bzw. Fritten.

Das Zinksilicat-Impfmaterial einer erfindungsgemäßen Masse liegt in dieser vorzugsweise in der Form von Impfkristallen vor, die beim Einbrennen Keime für weiteres Kristallwachstum bilden. Vorzugsweise ist mindestens ein Teil des Zinksilicat-Impfmaterials von kristalliner Beschaffenheit. Das kristalline Impfmaterial umfaßt vorzugsweise mindestens etwa 95 Gew.% kristallines Zn₂SiO₄, z.B. etwa 100 Gew.% kristallines Zn₂SiO₄.

Gemäß einem weiteren Aspekt der Erfindung wird einer erfindungsgemäßen Emailmasse ein zusätzliches kristallines Material, z.B. ein Wismutsilicat-Impfmaterial, einverleibt. Vorzugsweise macht das einverleibte Wismutsilicat-Impfmaterial mindestens etwa 1 Gew.% der Emailmasse aus.

Das Wismutsilicat-Impfmaterial umfaßt vorzugsweise ein kristallines Wismutsilicat, wie Bi₁₂SiO₂₀, Bi₄(SiO₄)₃, Bi₂SiO₅, in kristalliner Form sowie Gemische davon in einem Anteil von etwa 2 bis etwa 7 Gew.%.

Gemäß einem Verfahren zur Zubereitung einer erfindungsgemäßen Keramikemailmasse werden die vorstehend genannten Bestandteile in beliebiger Reihenfolge in den gewünschten Anteilen kombiniert und wahlweise mit einem organischen Lösungsmittel vereinigt.

Die Erfindung umfaßt auch ein Verfahren zur Verwendung des vorstehend genannten Keramikemails in Verbindung mit einem Glassubstrat, um z.B. einen farbigen Rand und/oder einen UV-beständigen Rand rings um dessen Peripherie zu bilden. In diesem Sinne wird ein Glassubstrat mit einem Keramikemailüberzug versehen, indem eine vorstehend genannte Keramikemailmasse auf das Glassubstrat aufgetragen, wahlweise Druck auf das überzogene Glassubstrat ausgeübt und dann das Substrat eingebrannt wird, um Bestandteile der Keramikemailmasse an das Substrat anzuschmelzen. Zu den Vorteilen eines erfindungsgemäßen Emails zählen dessen hervorragende Haftresistenzeigenschaften, gute Konsistenz, eine weite Einbrenntemperaturspanne, geringe Spannung und niedrige Kosten.

Die Erfindung wird nun eingehender unter Bezugnahme auf Beispiele beschrieben.

### Eingehende Beschreibung der Erfindung

Die vorliegende Erfindung schafft eine Keramikemailmasse, die die folgenden Bestandteile enthält: (1) mindestens eine herkömmliche bleifreie Oxidglasfritte, enthaltend in der gleichen oder in verschiedenen der genannten bleifreien Glasfritten ZnO und SiO₂ als Vorläufer von Zn₂ SiO₄ ; (2) ein Zinksilicat-Impfmaterial; (3) ein Färbemittel (Pigment); und wahlweise (4) ein Medium für die Bestandteile (1) - (3). Es wird angenommen, daß das Zinksilicat-Impfmaterial beim Einbrennen Keimbildung und das Wachstum mikrokristalliner Strukturen, z.B. kristalliner Zinksilicatfasern, in der Masse fördert. Obgleich das Medium (4) vorzugsweise in der Masse enthalten ist, kann es weggelassen und später zugesetzt werden, z.B. während des Siebdruckens, ohne von dem Wesen der vorliegenden Erfindung abzuweichen.

Typischerweise umfaßt eine erfindungsgemäße Keramikemailmasse 40-80 Gew.% einer oder mehrerer der vorstehend genannten bleifreien Oxidglasfritten, 0,05 bis 15 Gew.% eines Zinksilicat-Impfmaterials und 20-35 Gew.% eines Pigments. Insbesondere ist die bleifreie Oxidfritte in einem Anteil von 60-65 Gew.%, das Zinksilicat-Impfmaterial in einem Anteil von 1-5 Gew.% und das Pigment in einem Anteil von 25-33 Gew.% in der Masse enthalten. Die Summe der prozentualen Gewichtsanteile der durch eine oder mehrere der vorstehend genannten Fritten gelieferten Vorläufer von Zn₂SiO₄ ist geringer als etwa 35 Gew.% der Fritte bzw. Fritten, und die prozentualen Gewichtsanteile der vorstehend genannten bleifreien Metalloxidfritte(n), des Zinksilicat-Impfmaterials und des Pigments sind insgesamt nicht höher als 100%.

Vorzugsweise umfaßt eine erfindungsgemäße Keramikemailmasse 60-63 Gew.% einer bleifreien Metalloxidfritte bzw. bleifreier Metalloxidfritten, wobei die besagte Fritte bzw. Fritten Vorläufer von Zn₂SiO₄ enthält/enthalten, 1-3 Gew.% eines Zinksilicat-Impfmaterials und 27-30 Gew.% eines schwarzen Pigments. Vorzugsweise beträgt die Summe der prozentualen Gewichtsanteile der durch eine bzw. mehrere Fritten gelieferten Vorläufer von Zn₂SiO₄ weniger als etwa 35 Gew.%, aber mehr als etwa 20 Gew.%.

Was die Anteile von Zn₂SiO₄-Vorläufern in der Glasfritte bzw. den Glasfritten anbelangt, beträgt der Anteil an Zinkoxid und Siliciumdioxid in einer vorstehend genannten mindestens einen bleifreien Fritte 5-20% bzw. 20-30%, wenn immer der Gesamtanteil von Zn₂SiO₄-Vorläufern 35 Gew.% beträgt. Insbesondere vorzugsweise liegt der Anteil an in der Fritte bzw. den Fritten enthaltenem Zinkoxid innerhalb der Spanne von 10% bis 15%, und der Anteil an in der Fritte bzw. den Fritten enthaltenem Siliciumdioxid innerhalb der Spanne von 20% bis 25%, wenn immer der Gesamtanteil an Zn₂SiO₄-Vorläufern geringer ist als etwa 35 Gew.%. Der Zinkvorläufer kann ausschließlich durch eine Fritte geliefert werden und der Siliciumvorläufer kann durch eine andere Fritte geliefert werden, vorausgesetzt, daß beim Schmelzen der Emailmasse Zn₂SiO₄ gebildet wird:

Die Vorläufer sind von Zn₂ SiO₄ ZnO und SiO₂. Es können in äquivalenter Weise andere Vorläufer dieser Stoffe zum Einsatz gelangen, wie dies für

Fachleute ohne weiteres verständlich sein wird. Zu solchen anderen Vorläufern zählen Polymere, wie Siloxane, und diskrete Verbindungen, wie organometallische Verbindungen, die sich beim Einbrennen bei erhöhter Temperatur zersetzen, so daß ZnO bzw. SiO₂ gebildet wird. Die Stammverbindungen, also ZnO und SiO₂, können entweder in der gleichen bleifreien Fritte oder in verschiedenen Fritten enthalten sein, die sich beim Einbrennen verschmelzen, so daß Zn₂SiO₄ entsteht.

Das Zinksilicat-Impfmaterial kann aus jeder bekannten Phase des Zn/Si-Phasensystems gewählt werden; es wird jedoch Zinkorthosilicat (Zn₂SiO₄) bevorzugt. Das Zinksilicat-Impfmaterial umfaßt vorzugsweise mindestens etwa 90 Gew.% kristallines Zn₂SiO₄. Insbesondere vorzugsweise umfaßt das Zinksilicat-Impfmaterial mindestens etwa 95 Gew.% und bis 100 Gew.% kristallines Zn₂SiO₄.

Wie vorstehend erwähnt, bedeuten die Ausdrücke Kristall, kristallin, mikrokristallin und dergleichen, daß das erfindungsgemäße Material in ausreichendem Maße kristallin (geordnet) ist, um bei Gebrauch von Röntgenbeugungstechniken eine oder mehrere diskrete Phasen aufzuweisen.

Es besteht, ohne Anerkennung theoretischer Verbindlichkeit, die Ansicht, daß das Vorhandensein des Zinksilicat-Impfmaterials Keimbildung und Kristallwachstum bedingt, was erhöhte Feuerfestigkeit und Entglasung zur Folge hat. Die Entglasung bedingt die Ausbildung mikrokristalliner Strukturen, wie Zn₂SiO₄ und dergleichen, in dem geschmolzenen Email. Es wird angenommen, daß das Vorhandensein dieser mikrokristallinen Strukturen in dem geschmolzenen Email die Neigung des Emails zum Anhaften an Oberflächen, z.B. an Preßkissen, während des Formens des Glassubstrats bei erhöhter Temperatur stark reduziert.

Was die erfindungsgemäße bleifreie Oxidfritte anbelangt, kann von einer herkömmlichen keramischen Oxidfritte, wie einer auf Zink-Wismut basierenden Fritte Gebrauch gemacht werden. Die Fritte kann zusätzlich zu einer Zinkquelle eine Borquelle enthalten. Es kann z.B. eine aus Zinkoxid und Boroxid und wahlweise zusätzlichen Stoffen zusammengesetzte Fritte verwendet werden. Auch eine aus Zinkborsilicat oder aus einem nicht kristallinen Zinksilicatmaterial bestehende Fritte kann zum Einsatz gelangen. Eine solche Fritte wird vorzugsweise so formuliert, daß sie bei Erhitzung in situ die erforderlichen mikrokristallinen Zinksilicatstrukturen bildet. In der Praxis bevorzugt man die Einverleibung eines kristallinen Zinksilicat-Impfmaterials unmittelbar in die Emailmasse. Es ist wünschenswert, daß die Masse mindestens etwas Oxidfritte enthält, um ein Flußmittel zu bilden.

Ein für erfindungsgemäßen Einsatz geeignetes kristallines Zinksilicatmaterial kann nach einem von mehreren gut bekannten Verfahren hergestellt werden. So kann z.B. Zn₂SiO₄ (CAS-Register-Nr. 13597-65-4) durch Erhitzen von Zinkoxid (ZnO) und SiO₂ in einem Molarverhältnis von 2:1 bei 1300°C während einer Zeitspanne von 72 Stunden zubereitet werden. Dem erfahrenen Fachmann werden ohne weiteres andere Verfahren der Zubereitung von diesen und verwandten Materialien offensichtlich sein.

Die Teilchengröße eines erfindungsgemäßen Zinksilicat-Impfmaterials liegt vorzugsweise innerhalb der Spanne von 1 bis 4 Mikron und beträgt insbesondere vorzugsweise etwa 1,8 Mikron.

Typisch wird vorzugsweise auch ein Wismutsilicat-Impfmaterial in eine erfindungsgemäße Masse einbezogen. Ohne Anerkennung theoretischer Verbindlichkeit besteht die Ansicht, daß das Vorhandensein des Wismutsilicat-Impfmaterials Keimbildung und Kristallwachstum und somit erhöhte Feuerfestigkeit und Entglasung zur Folge hat. Entglasung bedingt die Ausbildung mikrokristalliner Strukturen, wie Bi₁₂SiO₂₀, Bi₂(SiO₃)₄ und dergleichen, in dem geschmolzenen Email. Es wird angenommen, daß das Vorhandensein dieser mikrokristallinen Strukturen in dem geschmolzenen Email dazu beiträgt, die Neigung des Emails zum Anhaften an Oberflächen während des Formens des Glassubstrats bei erhöhter Temperatur zu reduzieren.

Als bevorzugte Wismutsilicat-Impfmaterialien für diese Art eines reaktiven Systems können die Verbindungen Bi₁₂SiO₂₀, Bi₄(SiO₄)₃, Bi₂SiO₅ und Gemische davon erachtet werden, ohne auf sie beschränkt zu sein. Irgend eine bzw. alle dieser Verbindungen sind vorzugsweise kristallin und können innerhalb des gleichen kristallinen Materials als ein Gemisch vorhanden sein.

Ein zum Einsatz in Verbindung mit der vorliegenden Erfindung geeignetes kristallines Wismutsilicatmaterial kann nach einem von mehreren gut bekannten Verfahren hergestellt werden. So kann z.B. Bi₁₂SiO₂₀ (CAS-Register-Nr. 12377-72-9) durch Erhitzen von Wismutoxid und Siliciumdioxid in einem Molarverhältnis von 6:1 bei einer Temperatur bis zu 840°C während einer Zeitspanne von 16 Stunden [National Bureau of Standards, Monogr., 25:22 (1985)] hergestellt werden. Bi₄(SiO₄)₃ (CAS-Register-Nr. 15983-20-7) kann durch Einbrennen von Wismutoxid und Siliciumdioxid in einem Verhältnis von 2:3 bei einer Temperatur von 780°C während einer Zeitspanne von 50 Stunden, Nachmahlen und Einbrennen bei einer Temperatur von 830°C während einer Zeitspanne von 18 Stunden [Roob et al, North Dakota State Univ., JCPDS Grant-in-Aid Report (1980)] hergestellt werden. Bi₂SiO₅ (CAS-Register-Nr. 12027-75-7) kann durch Schmelzen von Wismutoxid und Siliciumdioxid im Verhältnis 1:1 bei einer Temperatur von 1000-1040°C, Abschrecken in Wasser und Kristallisieren bei 400-520°C während einer Zeitspanne von einer Woche [Keller, et al, Mineralogisch-Petrographisches Institut, Univ. Heidelberg, Deutschland, JCPDS Grant-in-Aid Report (1984)] hergestellt werden. Für den erfahrenen Fachmann sind andere Verfahren der Herstellung dieser und verwandter Materialien ohne weiteres offensichtlich.

Die Teilchengröße eines erfindungsgemäßen Wismutsilicat-Impfmaterials liegt vorzugsweise innerhalb der Spanne von 1 bis 4 Mikron und beträgt insbesondere vorzugsweise etwa 1,8 Mikron.

Zusätzliche kristalline Materialien, wie Aluminiumoxid-Silicatverbindungen, Calciumsilicatverbindungen, Boroxid-Aluminiumoxid-Silicatverbindungen, Soda-Calciumoxid-Aluminiumoxid-Silicatverbindungen, Feldspatverbindungen, Titandioxid, Zinkborat und Gemische davon, können dem Ansatz als Füllstoffe einverleibt werden. Es können noch andere metallische und/oder Oxidmaterialien, wie Eisen, Silicium, Zink und dergleichen, zugesetzt werden, um die gewünschten Eigenschaften, wie die Beständigkeit gegen Silberdurchschlag, zu verbessern, besonders, wenn deren Vorhandensein die Keimbildung und Wachstum der erforderlichen mikrokristallinen Zinksilicat- und Wismutsilicatstrukturen fördert.

Wie dies zur Zeit bevorzugt wird, enthält eine erfindungsgemäße Emailmasse eine Basis-Glasfritte, bei der es sich um mindestens eine herkömmliche bleifreie Fritte handelt, wie diejenigen, die von der Firma Cerdec Corporation (Washington, PA) kommerziell verfügbar sind. Solche Fritten können allein zum Einsatz gelangen oder gemischt werden, um die gewünschten Eigenschaften zu erzielen. Andere geeignete zinkhaltige Fritten sind in der Technik gut bekannt.

Ein repräsentativer Ansatz für eine geeignete erfindungsgemäße bleifreie Fritte hat die in Tabelle 1 angeführte Zusammensetzung:

**TABELLE 1**

| Oxid | Gewichtsprozentspanne |
|---|---|
| | |
| ZnO | 3 - 15 |
| SiO₂ | 10 - 25 |
| Bi₂O₃ | 20 - 55 |
| B₂O₃ | 2 - 20 |
| Na₂O | 1 - 10 |
| K₂O | 0 - 3 |
| Li₂O | 0 - 3 |
| CaO | 0 - 10 |
| SrO | 0 - 10 |
| TiO₂ | 0 - 5 |
| Al₂O₃ | 0 - 5 |
| ZrO₂ | 0 - 5 |
| F₂ | 0 - 3 |

In dem (an Oprosky et al erteilten) US-Patent Nr. 5 346 651 wird ein Verfahren zur Herstellung einer Fritte dieser Art offenbart. Die Einbrenntemperatur solcher Fritten ist genügend niedrig, um ausreichende Haftung an dem Substrat zu gewährleisten, und außerdem weisen diese Fritten Eigenschaften niedriger Dichte auf.

Beispielhafte zinkhaltige Fritten, die zum Einsatz in Verbindung mit der Erfindung geeignet sind, sind von der Firma Cerdec Corporation unter den Bezeichnungen E-8018, E-8009 und E-8008, kommerziell verfügbar.

Als Pigment für ein erfindungsgemäßes Keramikemail kommt jedes der kommerziell verfügbaren Pigmente in Frage. Besonders bevorzugte Pigmente sind von der Firma Cerdec Corporation als *2991 Pigment, das ein schwarzes Kupferchromitpigment ist, *2980 Pigment, das ein schwarzes Kobaltchromeisenpigment ist und *2987 Pigment, bei dem es sich um ein schwarzes Nickelmanganeisenchrompigment handelt, kommerziell verfügbar.

Ein in Verbindung mit einer erfindungsgemäßen Masse zu verwendendes Medium wird im Einklang mit seiner Endanwendung gewählt. Das Medium sollte die teilchenförmigen Stoffe in ausreichendem Maße in Schwebe halten und beim Einbrennen der Masse an dem Substrat ganz abbrennen. Die Medien sind typischerweise organischer Art, und zu ihnen zählen Zusammensetzungen auf der Basis von Fichtenölen, pflanzlichen Ölen, Mineralölen, Erdölfraktionen mit niedrigem Molekulargewicht, Tridecylalkohol, synthetischen und natürlichen Harzen und dergleichen.

Desgleichen kann erfindungsgemäß auch von Medien auf UV-Basis Gebrauch gemacht werden. Solche Medien auf UV-Basis sind in der Technik gut bekannt und setzen sich im allgemeinen aus polymerisierbaren Monomeren und/oder Oligomeren, die z.B. funktionelle Acrylat- oder Methacrylatgruppen enthalten, sowie Fotoinitiatoren und Polymerisationshemmstoffen zusammen. Repräsentative Medien sind in den US-Patenten Nr. 4 306 012 und 4 649 062 offenbart. Bekanntlich werden solche Medien nach Auftrag auf das Substrat durch Ultraviolettstrahlung ausgehärtet.

Das spezifische Medium und die jeweiligen Anteile werden je nach den spezifischen Bestandteilen der Zusammensetzung und der gewünschten Viskosität gewählt. Im allgemeinen beträgt der Lösungsmittelanteil etwa 10 bis etwa 40 Gew.% des Gesamtgewichtes der festen Emailmasse.

Im allgemeinen sind die Emailmassen viskoser Art, wobei die Viskosität von dem betreffenden Anwendungsverfahren und der Endanwendung abhängt. Zum Siebdrucken eignen sich Viskositäten von 10 bis 80 Pas (10 000 bis 80 000 CP) und vorzugsweise 35 bis 65 Pas (35 000 bis 65 000 Centipoise) bei 20°C, bestimmt mittels eines Brookfield-Viskosimeters mit einer Spindel #7 bei 20 U/min.

Zwecks Herstellung einer erfindungsgemäßen Emailmasse wird eine Fritte nach herkömmlichen Verfahren zu einem feinen Pulver gemahlen und in jeder beliebigen Reihenfolge mit einem vorstehend genannten Zinksilicat-Impfmaterial, einem Pigment und gegebenenfalls einem beliebigen Wismutsilicat-Impfmaterial und beliebigen Füllstoffen kombiniert. Falls das Zinksilicat-Impfmaterial der Masse ein kristallines Zinksilicat umfassen soll, wird auch dieses zugesetzt. Es können andere Oxide, wie vorstehend erörtert, hinzugefügt werden, sowie gegen Silberdurchschlag resistente Materialien. Die Emailmasse kann mehr als einen Vertreter der verschiedenen vorstehend genannten Bestandteilarten enthalten. Die zubereitete Emailmasse kann auf herkömmliche Weise auf ein Glassubstrat aufgetragen werden, z.B. durch Siebdruck, Abziehbilder, Aufspritzen, Anstreichen, Walzbeschichtung und dergleichen. Für den Auftrag der Masse auf Glassubstrate wird Siebdruck bevorzugt.

Nach Auftrag der Masse auf ein Substrat in einem gewünschten Muster wird der aufgetragene Überzug dann eingebrannt, um das Email mit dem Substrat zu verbinden. Die Einbrenntemperatur hängt im allgemeinen von der Einbrenntemperatur der Fritte ab und liegt vorzugsweise innerhalb einer weiten Temperaturspanne. Typischerweise liegt die Einbrennspanne einer erfindungsgemäßen Masse im Bereich von 593-732 °C (1100-1350°F), insbesondere vorzugsweise im Bereich von 649-704 °C (1200 bis 1300°F) und am besten etwa 677°C (1250°F). Wenn immer auf das Substrat Druck ausgeübt wird, beträgt dieser typisch von 6895 bis 20684 N/m² (1 bis 3 psi) und vorzugsweise etwa 13790 N/m² (2 psi).

Die nachstehenden Beispiele betreffen bevorzugte Ausführungsformen der Erfindung. Sie sollen die Erfindung eingehender erläutern, und sind für die Erfindung nicht einschränkend.

### BEISPIELE

Es wurden mehrere beispielhafte Emailmassen nach herkömmlichen Verfahren und unter Einsatz der in Tabelle II angeführten Bestandteile zubereitet. Die angegebenen prozentualen Gewichtsanteile werden unter der Annahme berechnet, daß die Masse kein Druckmedium enthält. Die in Tabelle II genannte Fritte E-8018 ist eine bleifreie Wismutborsilicat-Fritte, die kommerziell von der Firma Cerdec Corporation verfügbar ist, wobei deren ZnO-Gehalt 14,4 Gew.% und deren SiO₂-Gehalt 20,1 Gew.% betragen. Das Pigment *2991 ist ein kommerziell von der Firma Cerdec Corporation verfügbares schwarzes Pigment. Zinksilicat-Impfmaterial wurde durch Reagieren von Zinkoxid mit Siliciumdioxid auf die beschriebene Weise hergestellt, wobei Röntgenbeugungsanalyse das Vorhandensein von Zinkorthosilicat bewies. Wismutsilicat-Impfmaterial wurde durch Reagieren von Wismuttrioxid mit Silicium auf die beschriebene Weise hergestellt, wobei Röntgenbeugungsanalyse das Vorhandensein von Wismutblende bewies. Für jeden in den Beispielen genannten Bestandteil wurden identische Materialien verwendet.

**Tabelle II**

| Bestandteil | Beispiele | | | |
|---|---|---|---|---|
| | 1 | 2 | 3 | 4 |
| E-8018 | 63,64 | 63,64 | 63,64 | 62,00 |
| *2991 Pigment | 30,30 | 30,30 | 30,30 | 26,00 |
| Wismutsilicat-Impfmaterial | 5,00 | 4,00 | 3,03 | 5,00 |
| Zinksilicat-Impfmaterial | 1,06 | 2,06 | 3,03 | 7,00 |

Die vorliegende Erfindung wurde vorstehend unter Bezugnahme auf Beispiele beschrieben. Es ist jedoch zur Kenntnis zu nehmen, daß die Erfindung nicht auf die besonderen vorstehend angeführten Ausführungsformen beschränkt ist und daß innerhalb des Rahmens der beigefügten Ansprüche gewisse offensichtliche Modifikationen vorgenommen werden können.

## Patentansprüche

1. Eine Keramikemailmasse, umfassend:
40-80 Gew.-% einer oder mehrerer bleifreier Metalloxidglasfritte/n, enthaltend in der gleichen oder in verschiedenen der genannten bleifreien Glasfritten ZnO und SiO₂ als Vorläufer von Zn₂SiO₄, wobei die Summe der prozentualen Gewichtsanteile der besagten Vorläufer von Zn₂SiO₄ in der/den besagten bleifreien Metalloxidfritte/n mindestens 15 Gew.-% und weniger als 35 Gew.-% der besagten bleifreien Metalloxidfritte/n beträgt; 0,05-15 Gew.% eines Zinksilicat-Impfmaterials; und
19-37 Gew.% eines Pigments, wobei die Summe der prozentualen Gewichtsanteile der besagten mindestens einen bleifreien Metalloxidfritte, des Zinksilicat-Impfmaterials und des Pigments 100 % nicht überschreitet

2. Die Masse nach Anspruch 1, **dadurch gekennzeichnet, dass** die genannte/n bleifreie/n Glasfritte/n insgesamt 5-15 Gew.-%, insbesondere 10 bis 15 Gew.-% Zinkoxid und 20 bis 30 Gew.-%, insbesondere 20 bis 25 Gew.-% SiO₂ enthalten, wobei die Summe von ZnO und SiO₂ weniger als 35 Gew.-% beträgt.

3. Die Masse nach Anspruch 1 oder 2, **dadurch gekennzeichnet, dass** das Zinksilicat-Impfmaterial im Wesentlichen aus kristallinem Zn₂SiO₄ besteht.

4. Die Masse nach einem der Ansprüche 1 bis 3, **dadurch gekennzeichnet, dass** diese des Weiteren ein Wismutsilicat-Impfmaterial in einer Menge von mindestens 1 Gew.% der Keramikemailmasse umfasst.

5. Die Masse nach Anspruch 4, **dadurch gekennzeichnet, dass** das Wismutsilicat-Impfmaterial kristallines Wismutsilicat umfasst.

6. Die Masse nach Anspruch 5, **dadurch gekennzeichnet, dass** das kristalline Wismutsilicat mindestens eine aus der Bi₁₂SiO₂₀, Bi₄(SiO₄)₃ und Bi₂SiO₅ umfassenden Gruppe ausgewählte kristalline Phase enthält.

7. Die Masse nach einem der Ansprüche 1 bis 6, **dadurch gekennzeichnet, dass** diese des Weiteren ein gegenüber Silberdurchschlag resistentes Material, enthaltend Eisen, Silicium oder Zink, umfasst.

8. Die Masse nach einem der Ansprüche 1 bis 7, **dadurch gekennzeichnet, dass** diese des Weiteren ein organisches Medium umfasst.

9. Ein Verfahren zur Zubereitung einer Keramikemailmasse durch Kombination folgender Bestandteile:
40-80 Gew.-% einer oder mehrerer bleifreier Metalloxidfritte/n, enthaltend in der gleichen oder in verschiedenen der genannten bleifreien Glasfritten ZnO und SiO₂ als Vorläufer von Zn₂SiO₄, wobei die Summe der prozentualen Gewichtsanteile der besagten Vorläufer von Zn₂SiO₄ in der/den besagten bleifreien Metalloxidfritte/n mindestens 15 Gew.-% und weniger als 35 Gew.-% der besagten bleifreie/n Metalloxidfritte/n beträgt; 0,05-15 Gew.-% eines Zinksilicat-Impfmaterials; und
19-37 Gew.% eines Pigments, wobei die Summe der prozentualen Gewichtsanteile der besagten mindestens einen bleifreien Metalloxidfritte, des Zinksilicat-Impfmaterials und des Pigments 100 % nicht überschreitet.

10. Ein Glassubstrat mit einem daran anhaftenden Keramikemailüberzug, erhältlich durch die Schritte des Aufbringens einer Keramikemailmasse gemäß einem der Ansprüche 1 bis 8 auf das Glassubstrat und des Erhitzens des überzogenen Glassubstrats auf eine erhöhte Temperatur, um Bestandteile der Keramikemailmasse an das Glassubstrat anzuschmelzen.

11. Ein überzogenes Glassubstrat nach Anspruch 10, **dadurch gekennzeichnet, dass** der Keramikemailüberzug kristallines Zinksilicat und kristallines Wismutsilicat enthält.

12. Ein überzogenes Glassubstrat nach Anspruch 10 oder 11, **dadurch gekennzeichnet, daß** der Überzug an mindestens einem Teil der Peripherie des Glassubstrats vorgesehen ist.

13. Ein überzogenes Glassubstrat nach einem der Ansprüche 10 bis 12, **dadurch gekennzeichnet, dass** bei seiner Herstellung des Weiteren die Schritte der Ausübung eines Formdrucks mit Hilfe eines Formwerkzeugs auf das erhitzte Glas und des Entfernens des geformten Glases von dem Formwerkzeug umfasst werden.

## Claims

1. A ceramic enamel composition, comprising:
40 - 80 wt.% of one or more lead-free metal oxide glass frit(s), containing in the same or in different aforementioned lead-free glass frits ZnO and SiO₂ as precursors of Zn₂SiO₄, wherein the sum of the percentage proportions by weight of said precursors of Zn₂SiO₄ in said lead-free metal oxide frit(s) is at least 15 wt.% and less than 35 wt.% of said lead-free metal oxide frit(s);
0.05 - 15 wt.% of a zinc silicate seed material; and 19 - 37 wt.% of a pigment, wherein the sum of the percentage proportions by weight of said at least one lead-free metal oxide frit, zinc silicate seed material and pigment does not exceed 100%.

2. The composition according to claim 1, **characterised in that** the aforementioned lead-free glass frit(s) contain a total of 5 - 15 wt.%, especially 10 to 15 wt.% zinc oxide and 20 to 30 wt.%, especially 20 to 25 wt.% SiO₂, wherein the sum of ZnO and SiO₂ is less than 35 wt.%.

3. The composition according to claim 1 or 2, **characterised in that** the zinc silicate seed material consists substantially of crystalline Zn₂SiO₄.

4. The composition according to one of claims 1 to 3, **characterised in that** it additionally comprises a bismuth silicate seed material in a quantity of at least 1 wt.% of the ceramic enamel composition.

5. The composition according to claim 4, **characterised in that** the bismuth silicate seed material comprises crystalline bismuth silicate.

6. The composition according to claim 5, **characterised in that** the crystalline bismuth silicate contains at least one crystalline phase selected from the group comprising Bi₁₂SiO₂₀, Bi₄ (SiO₄)₃ and Bi₂SiO₅.

7. The composition according to one of claims 1 to 6, **characterised in that** it additionally comprises a material resistant to silver bleed-through, containing iron, silicon or zinc.

8. The composition according to one of claims 1 to 7, **characterised in that** it additionally comprises an organic medium.

9. A process for the preparation of a ceramic enamel composition by combining the following components:
40 - 80 wt.% of one or more lead-free metal oxide frit(s), containing in the same or in different aforementioned lead-free glass frits ZnO and SiO₂ as precursors of Zn₂SiO₄, wherein the sum of the percentage proportions by weight of said precursors of Zn₂SiO₄ in said lead-free metal oxide frit(s) is at least 15 wt.% and less than 35 wt.% of said lead-free metal oxide frit(s);
0.05 - 15 wt.% of a zinc silicate seed material; and 19 - 37 wt.% of a pigment, wherein the sum of the percentage proportions by weight of said at least one lead-free metal oxide frit, zinc silicate seed material and pigment does not exceed 100%.

10. A glass substrate with a ceramic enamel coating adhering thereto, obtainable by the steps of applying a ceramic enamel composition according to one of claims 1 to 8 to the glass substrate and heating the coated glass substrate to an elevated temperature in order to fuse components of the ceramic enamel composition on to the glass substrate.

11. A coated glass substrate according to claim 10, **characterised in that** the ceramic enamel coating contains crystalline zinc silicate and crystalline bismuth silicate.

12. A coated glass substrate according to claim 10 or 11, **characterised in that** the coating is provided on at least part of the periphery of the glass substrate.

13. A coated glass substrate according to one of claims 10 to 12, **characterised in that**, during the production thereof, the steps of exerting a forming pressure on the heated glass using a forming die and removing the formed glass from the forming die are additionally comprised.

## Revendications

1. - Masse d'émail de céramique comprenant :
- 40-80 % en poids d'une ou plusieurs frittes de verre d'oxyde métallique sans plomb contenant dans la même ou dans différentes des frittes de verre sans plomb citées, ZnO et SiO₂ comme précurseurs de Zn₂SiO₄, la somme des pourcentages des fractions pondérales des précurseurs précités de Zn₂SiO₄ dans la (ou les) fritte(s) d'oxyde métallique sans plomb précitée(s) s'élevant à au moins à 15 % en poids et à moins de 35 % en poids de la (ou des) fritte(s) d'oxyde métallique sans plomb précitée(s) ;
- 0,05-15 % en poids d'une matière d'ensemencement de silicate de zinc ; et
- 19-37 % en poids d'un pigment,
la somme des pourcentages des fractions pondérales de la au moins une fritte d'oxyde métallique sans plomb précitée, de la matière d'ensemencement de silicate de zinc et du pigment ne dépassant pas 100 %.

2. - Masse selon la revendication 1, **caractérisée par le fait que** la (ou les) fritte(s) de verre sans plomb citée(s) contient (contiennent) au total 5-15 % en poids, en particulier 10 à 15 % en poids, d'oxyde de zinc, et 20 à 30 % en poids, en particulier 20 à 25 % en poids, de SiO₂, la somme de ZnO et SiO₂ s'élevant à moins de 35 % en poids.

3. - Masse selon l'une des revendications 1 ou 2, **caractérisée par le fait que** la matière d'ensemencement de silicate de zinc se compose essentiellement de Zn₂SiO₄ cristallin.

4. - Masse selon l'une des revendications 1 à 3, **caractérisée par le fait que** celle-ci contient en outre une matière d'ensemencement de silicate de bismuth dans une quantité d'au moins 1% en poids de la masse d'émail de céramique.

5. - Masse selon la revendication 4, **caractérisée par le fait que** la matière d'ensemencement de silicate de bismuth comprend du silicate de bismuth cristallin.

6. - Masse selon la revendication 5, **caractérisée par le fait que** le silicate de bismuth cristallin contient au moins une phase cristalline choisie dans le groupe comprenant Bi₁₂SiO₂₀, Bi₄(SiO₄)₃ et Bi₂SiO₅.

7. - Masse selon l'une des revendications 1 à 6, **caractérisée par le fait que** celle-ci contient en outre une matière résistante vis-à-vis de la migration d'argent, contenant du fer, du silicium ou du zinc.

8. - Masse selon l'une des revendications 1 à 7, **caractérisée par le fait que** celle-ci contient en outre un milieu organique.

9. - Procédé de préparation d'une masse d'émail de céramique par combinaison des constituants suivants :
- 40-80 % en poids d'une ou plusieurs frittes d'oxyde métallique sans plomb, contenant, dans la même ou dans différentes des frittes de verre sans plomb citées, ZnO et SiO₂ comme précurseurs de Zn₂SiO₄, la somme des pourcentages des fractions pondérales des précurseurs précités de Zn₂SiO₄ dans la (ou les) fritte (s) d'oxyde métallique sans plomb précitée(s) s'élevant à au moins 15 % en poids et à moins de 35 % en poids de la (ou des) fritte(s) d'oxyde métallique sans plomb précitée(s) ;
- 0,05-15 % en poids d'une matière d'ensemencement de silicate de zinc ; et
- 19-37 % en poids d'un pigment,
la somme des pourcentages de fractions pondérales de la au moins une fritte d'oxyde métallique sans plomb précitée, de la matière d'ensemencement de silicate de zinc et du pigment ne dépassant pas 100 %.

10. - Substrat de verre avec un revêtement d'émail céramique adhérant à celui-ci, pouvant être obtenu par les étapes d'application d'une masse d'émail de céramique telle que définie à l'une des revendications 1 à 8 sur le substrat de verre et de chauffage du substrat de verre revêtu à une température élevée pour faire fondre des composants de la masse d'émail de céramique sur le substrat de verre.

11. - Substrat de verre revêtu selon la revendication 10, **caractérisé par le fait que** le revêtement d'émail céramique contient du silicate de zinc cristallin et du silicate de bismuth cristallin.

12. - Substrat de verre revêtu selon l'une des revendications 10 ou 11, **caractérisé par le fait que** le revêtement est prévu sur au moins une partie de la périphérie du substrat de verre.

13. - Substrat de verre revêtu selon l'une des revendications 10 à 12, **caractérisé par le fait que**, lors de sa fabrication, sont comprises en outre l'étape d'exercice d'une pression de formage à l'aide d'un outil de formage sur le verre chauffé et l'enlèvement du verre façonné à partir de l'outil de formage.
